# EUROPÄISCHE PATENTSCHRIFT

(11) **EP 2 451 677 B1**
(45) Veröffentlichungstag und Bekanntmachung des Hinweises auf die Patenterteilung: **06.03.2013**
(21) Anmeldenummer: 10730746.4
(22) Anmeldetag: 23.06.2010
(51) Int. Cl.: G02B 27/00, B60R 11/04

(54) **VERZEICHNUNGSKORREKTUR VON VIDEOSYSTEMEN**
DISTORTION CORRECTION OF VIDEO SYSTEMS
CORRECTION DE DISTORSION DE SYSTÈMES VIDÉO

(30) Priorität: 08.07.2009 DE 102009027520
(43) Veröffentlichungstag der Anmeldung: 16.05.2012
(73) Patentinhaber: ROBERT BOSCH GMBH, 70442 Stuttgart (DE)
(72) Erfinder: SEGER, Ulrich, 71229 Leonberg-Warmbronn (DE); Franz, Gerald, 71522 Backnang (DE)
(86) Internationale Anmeldenummer: PCT/EP2010/058865
(87) Internationale Veröffentlichungsnummer: WO 2011/003735

(56) Entgegenhaltungen:
- EP-A1- 1 627 773
- DE-A1- 10 054 307
- DE-A1-102004 024 735
- DE-T2- 3 880 075
- DE-T2- 69 014 553
- US-A1- 2003 010 890

## Beschreibung

### Stand der Technik

Kraftfahrzeuggestützte Videosysteme, beispielsweise Frontsicht-Videosysteme, erfassen einen vor dem Fahrzeug gelegenen Aufnahmebereich durch optische Mittel. Hierbei wird das Bild durch eine Scheibe hindurch erfasst, die die Fahrgastzelle des Fahrzeugs abschließt.

Insbesondere wird bei Frontsicht-Videosystemen der vor dem Fahrzeug liegende Aufnahmebereich durch die Windschutzscheibe des Kraftfahrzeugs hindurch erfasst. Die Anordnung des zur Erfassung notwendigen optischen Systems in einer Position hinter der Windschutzscheibe ist notwendig, um das optische System und insbesondere die Kamera vor Verunreinigungen oder Schäden zu schützen, die durch Spritzwasser oder Ähnliches während der Fahrt verursacht werden. Ferner wird das optische System und insbesondere die Kamera innerhalb der Fahrgastzelle angeordnet, um dieses auch vor weiteren direkten Umwelteinflüssen (Witterung) zu schützen, wenn das Kraftfahrzeug nicht in geschlossenen Räumen abgestellt wird.

Durch die Windschutzscheibe erfährt das Kamerabild jedoch gegenüber einer Abbildung ohne Windschutzscheibe eine optische Verzerrung, im Wesentlichen entlang einer Richtung. Diese Verzerrung wird auch als Verzeichnung bezeichnet, die sich durch den Strahlengang durch die Windschutzscheibe hindurch ergibt, und insbesondere durch verschiedene Verläufe des Strahlengangs, abhängig vom Winkel des Strahlengangs zum Verlauf der Windschutzscheibe. Insbesondere ergeben sich Verzeichnungen bzw. Verzerrungen bei Aufnahmebereichen, die einen breiten Winkelbereich abdecken, d.h. einen Winkelbereich mit Strahlengängen, die sowohl im spitzen Winkel als auch im nahezu senkrechten Winkel auf die Windschutzscheibe auftreffen. Derartige Verzerrungen treten daher auf, wenn im selben Bildbereich sowohl beispielsweise Straßenbelag als auch Ampeln oder andere erhöht vorgesehene Verkehrszeichen erfasst werden sollen.

Derartige Verzerrungen werden in Systemen gemäß dem Stand der Technik mittels Bildverarbeitungsalgorithmen kompensiert, die mit einem hohen rechnerischen Aufwand in einer Datenverarbeitungsanlage implementiert sind, mit der ein erfasstes Bild elektronisch weiterverarbeitet wird.

Während Windschutzscheiben eine im Wesentlichen lineare Verzerrung entlang einer Richtung erzeugen (d.h. in Richtung des Azimutalwinkels) ergeben sich bei komplexeren Formen komplexere Verzerrungen. Aufgrund der damit stark ansteigenden Berechnungskomplexität sind für komplexe Verzerrungsgeometrien Bildverarbeitungsalgorithmen zur Kompensation nur bedingt geeignet.

Die Druckschrift DE 3880075 T2 sieht eine Vorrichtung zur Kompensation einer Achromatisierung vor, die sich durch die Krümmung von aerodynamisch geformten Cockpitscheiben von Flugzeugen ergeben. Aus der komplexen Krümmung der Cockpitscheiben ergibt sich eine komplexe notwendige optische Abbildung für den optischen Kompensationsmechanismus, der zwei Ablenkprismen umfasst, um eine Anamorphose in Azimutrichtung durch Brennweitenänderung in Kombination mit einer Ablenkung und Anamorphose in Elevationsrichtung zu bewirken. Zum einen ist die dort beschriebene Vorrichtung zur Entzerrung von Verzerrungen durch konische Glasflächen vorgesehen, die sich grundsätzlich von Verzerrungen von Windschutzscheiben unterscheiden (z.B. hinsichtlich der Komplexität), und zum anderen ist die dort vorgeschlagene Vorrichtung aus mehreren aufeinander abzustimmenden und präzise zu justierenden aufwändigen Elementen zusammengesetzt, die spezifische Materialeigenschaften haben. Insbesondere ist jedoch zu bemerken, dass DE 3880075 T2 nicht zu Kompensationen von Längsverzerrungen geeignet ist, wie sie bei Windschutzscheiben auftreten.

Die Druckschnitt DE 69014553 T2 zeigt eine Bildkorrekturvorrichtung entsprechend dem Oberbegriff des Anspruchs 7.

### Offenbarung der Erfindung

Der Erfindung liegt das Konzept zugrunde, zur Kompensation einer Streckung in einer Richtung, wie sie beim Durchtritt eines Strahlengangs durch eine dazu geneigte Windschutzscheibe entsteht, mit einer Bildkorrektur vorrichtung nach Anspruch 7, mittels einer Entzerrungsscheibe zumindest teilweise zu kompensieren, die zu der Windschutzscheibe eine Formabweichung bezogen auf eine planparallele zur Windschutzscheibe parallele Platte aufweist. Diese Formabweichung wird vorgesehen entweder durch (i) eine Krümmung der Entzerrungsscheibe, die im wesentlichen komplementär zu der Krümmung der Windschutzscheibe ist, (ii) eine nicht planparallele bzw. keilförmige Ausbildung der Entzerrungsscheibe, (iii) durch eine Anordnung der Entzerrungsscheibe gewinkelt zu der Windschutzscheibe, oder durch eine beliebige Kombination dieser Merkmale, d.h. durch die Kombination (i) und (ii) und (iii), durch die Kombination (i) und (ii), durch die Kombination (ii) und (iii) oder durch die Kombination (i) und (iii).

Als Formabweichung wird eine Krümmung verstanden, die nicht der Krümmung der Windschutzscheibe entspricht, eine nicht planparallele Ausbildung der Windschutzscheibe d.h. Ausbildung der Windschutzscheibe mit einem nicht konstanten Dickenverlauf, sowie eine gewinkelte Anordnung der Entzerrungsscheibe relativ zur Windschutzscheibe. Gemäß dem zuletzt genannten Merkmal umfasst daher die hier beschriebene Formabweichung auch ein Abweichung in der Orientierung bezogen auf die Windschutzscheibe.

Die Krümmung der Entzerrungsscheibe, die im wesentlichen komplementär zu der Krümmung der Windschutzscheibe ist, kann ausgeführt werden durch einen Verlauf entlang eines räumlichen Winkelabschnitts eines Rings, insbesondere durch eine torusförmige Krümmung, oder, in einer vereinfachten Ausführungsform, durch eine zylinderförmige Krümmung. Diese Krümmung betrifft nur einen kleinen Winkelabschnitt eines Torus bzw. Zylinders und nicht eine Form, die einem vollen Torus bzw. Zylinder entspricht. Die Krümmung der Entzerrungsscheibe wird vorgesehen durch eine entsprechende Krümmung mindestens einer Außenseite der Entzerrungsscheibe. Beide Außenseite der Entzerrungsscheibe können die gewünschte komplementäre Krümmung aufweisen, oder nur eine Außenseite der Entzerrungsscheibe kann die gewünschte komplementäre Krümmung aufweisen, wobei die gegenüberliegende Außenseite bsp. entlang einer Ebene verläuft.

Die nicht planparallele (d.h. der sich monoton, streng monoton, oder mit konstanter Dickenverringerung verjüngende Verlauf der Entzerrungsscheibe) bzw. keilförmige Ausbildung der Entzerrungsscheibe umfasst einen Verlauf der Entzerrungsscheibe, bei dem sich die beiden Außenflächen der Scheibe zu einem Punkt hin, oder zu einer Geraden hin, oder zu einer Linie hin, deren Länge nur einen Teil einer Außenkante der Entzerrungsscheibe beträgt, verjüngt. Sowohl Gerade als auch Punkt können innerhalb der Entzerrungsscheibe liegen, vorzugsweise an einem Rand oder einer Außenkante der Entzerrungsscheibe, oder können an einer Stelle in Verlängerung des Verlaufs der Entzerrungsscheibe liegen. Gemäß einer Betrachtungsweise wird die nicht planparallele bzw. keilförmige Ausbildung vorgesehen durch eine nicht konstante Dicke der Entzerrungsscheibe, die sich zu einem Punkt, einer Geraden oder einer Linie (wie oben beschrieben) hin monoton, streng monoton, oder konstant verringert.

Die nicht planparallele keilförmige Ausbildung der Entzerrungsscheibe wird beispielsweise vorgesehen durch Pressen einer (insbesondere planparallelen), transparenten Kunststoffplatte, insbesondere durch Blankpressen einer Kunststoffkorrekturplatte, die nach dem Pressen die Entzerrungsscheibe mit der gewünschten Form vorsieht.

Die Anordnung der Entzerrungsscheibe gewinkelt zu der Windschutzscheibe betrifft einen Winkel zwischen der Außenfläche der Entzerrungsscheibe, die der Windschutzscheibe zugewandt ist, wobei diese durch den Winkel vorgesehene gewinkelte Anordnung im Verlauf der Beschreibung noch näher beschrieben ist.

Anstatt oder in Kombination mit den optischen Maßnahmen (i), (ii) und/oder (iii) kann auch die Brechzahl der Entzerrungsscheibe einen nicht konstanten Verlauf aufweisen. Dies wird beispielsweise durch entsprechende Anisotropie der Zusammensetzung oder physikalischer Eigenschaften (bsp. inhomogene Dichteverteilung durch inhomogene Verpressung einer homogenen Kunststoffplatte). Dies kann erfindungsgemäß ebenso als Formabweichung bezeichnet werden, obwohl die Platte selbst in ihren Außenmaßen zwar nicht notwendigerweise eine körperliche physikalische Formabweichung aufweist, jedoch in ihren optischen Eigenschaften einer körperlichen Formabweichung äquivalent ist. Der Begriff körperliche physikalische Formabweichung betrifft der Verlauf der Außenflächen der Scheibe. Als Formabweichung (allgeimein) wird erfindungsgemäß ein optisches Verhalten für Strahlen, die durch die Scheibe hindurch treten, bezeichnet, das von einem optischen Verhalten einer planparallelen Platte mit konstanter Brechzahl abweicht.

Alle diese Maßnahmen sind ausgebildet, um die Verzeichnung bzw. Verzerrung zumindest teilweise zu kompensieren, die durch die Windschutzscheibe vorgesehen wird.

Als weitere bevorzugte Ausführungsform wird das erfindungsgemäße Verfahren und die erfindungsgemäße Bildkorrekturvorrichtung vorgesehen durch nur eine einzelne Entzerrungsscheibe. Die erfindungsgemäße Entzerrungsscheibe ist in dieser Ausführungsform das einzige optische Element (d.h. Element, das den optischen Strahlengang modifiziert), das zwischen Bildaufnahmevorrichtung (und dessen Linse) und der Windschutzscheibe vorgesehen ist. Die Bildaufnahmevorrichtung kann dann als übliche Kamera vorgesehen werden, die keine weiteren optischen Ent- oder Verzerrungselemente aufweist und nur ein zur unverzerrten Bildaufnahme vorgesehenes Linsensystem (mit mindestens einer Linse) umfasst, wobei die Entzerrung der von der Windschutzscheibe vorgesehenen Verzerrung im wesentlichen nur von der einzelnen (vorzugsweise einschichtigen) Entzerrungsscheibe vorgesehen wird. Lediglich die einzelne Entzerrungsscheibe sieht dann die Entzerrung vor.

Da der Strahlengang sowohl durch die Windschutzscheibe als auch durch die transparente Entzerrungsscheibe hindurch gelenkt wird, werden die jeweiligen Wirkungen miteinander kombiniert, wobei die Wirkung der Entzerrungsscheibe im Wesentlichen komplementär zu der Wirkung der Windschutzscheibe ist. Während die Windschutzscheibe von vorne, d.h. im Falle der gewinkelten Anordnung der Entzerrungsscheibe im spitzen Winkel, auf die Windschutzscheibe auftreffende Strahlengänge nur wenig verzerrt, ergeben sich beim Durchtritt von Strahlengängen in einem im Wesentlichen senkrechten Winkel deutlich stärkere Verzerrungen in Form einer mit dem Winkel zur Windschutzscheibe zunehmenden Streckung. Da die jeweiligen Strahlengänge durch die gesamte Dicke der Entzerrungsscheibe (in verschiedenen Winkeln zur Entzerrungsscheibenoberfläche) laufen, wird die durch die Windschutzscheibe erzeugte Streckung durch eine entsprechende Stauchung kompensiert. Da die Streckung abhängig ist vom Winkel des Strahlengangs, ist auch die Kompensation, d.h. die Stauchung, vom Winkel des Strahlengangs abhängig, jedoch in umgekehrter Weise.

Neben einem besonders einfachen Aufbau, der sich sehr kostengünstig realisieren lässt und wenig Raum einnimmt, erlaubt die Erfindung die Anpassung an verschiedene Windschutzscheibengeometrien (d.h. insbesondere Neigungswinkel und Windschutzscheibendicke) durch eine einfache Justierung des Winkels zwischen Entzerrungsscheibe und Windschutzscheibe. Des Weiteren kann die Entzerrungsscheibe auf einfache Weise an Eigenschaften der Windschutzscheibe zur Kompensation der von der Windschutzscheibe verursachten Verzerrung angepasst werden durch geeignete Auswahl von Dicken der Entzerrungsscheibe, Materialeigenschaften, insbesondere Brechungszahl der Entzerrungsscheibe und gegebenenfalls Form bzw. Krümmung der Entzerrungsscheibe.

Erfindungsgemäß wird zur Entzerrung daher bei der Erfassung von Bilddaten durch eine Windschutzscheibe hindurch ein Bildaufnahmesystem im Inneren eines Kraftfahrzeugs vorgesehen und die optische Achse des Bildaufnahmesystems auf einen Aufnahmebereich außerhalb des Kraftfahrzeugs ausgerichtet. Bilddaten des außen liegenden Aufnahmebereichs werden durch die Windschutzscheibe hindurch erfasst, die geneigt zu der optischen Achse ist. Zur Kompensation von dadurch erzeugten Verzerrungen wird bei der Erfassung der Bilddaten der Aufnahmebereich durch eine transparente Entzerrungsscheibe hindurch erfasst. Die transparente Entzerrungsscheibe ist während des Erfassens gewinkelt bzw. geneigt zur Windschutzscheibe im Inneren des Fahrzeugs angeordnet, oder ist gekrümmt (im wesentlichen komplementär zu der Krümmung der Windschutzscheibe) angeordnet, oder ist als eine nicht planparallele bzw. keilförmige Ausbildung der Entzerrungsscheibe angeordnet, wobei durch die Anordnung die beiden Außenflächen der Entzerrungsscheibe unterschiedliche Winkel zur Windschutzscheibe aufweisen. Diese Maßnahmen können wie oben beschrieben kombiniert werden.

Der Brechungsindex der Entzerrungsscheibe darf sich von dem Brechungsindex des Materials, aus dem die Windschutzscheibe gefertigt ist, unterscheiden. Durch die Wahl des Brechungsindex (bzw. dessen Verlauf), durch den der Strahlengang innerhalb der Entzerrungsscheibe manipuliert wird, lässt sich die Entzerrungsscheibe zur Kompensation an die Windschutzscheibe und deren optische Eigenschaften anpassen. Vorzugsweise wird hierbei das Bild durch eine PMMA-Platte aufgenommen, die die Entzerrungsscheibe vorsieht.

Gemäß einer weiteren bevorzugten Ausführungsform werden die Bilddaten durch eine (beispielsweise planparallele) Platte hindurch erfasst, die die Entzerrungsscheibe bildet. Die Winkelung zwischen Entzerrungsscheibe und Windschutzscheibe, d.h. die Neigung zwischen Windschutzscheibe und der planparallelen Platte, die die Entzerrungsscheibe vorsieht, wird vorzugsweise vorgesehen durch Neigung der planparallelen Platte zu der Windschutzscheibe in einer Ebene, in der die optische Achse liegt. Vorzugsweise ist die Entzerrungsscheibe in einem Azimutalwinkel zu der Windschutzscheibe geneigt. Vorzugsweise ist der Winkel zwischen Windschutzscheibe und Entzerrungsscheibe <15°, <10°, <8°, <5°, <2° oder auch <1°, jedoch vorzugsweise >0,1°, >0,2° oder >0,5°.

Die Windschutzscheibe ist vorzugsweise mit einem positiven spitzen Winkel zu der optischen Achse geneigt. Die optische Achse verläuft im Wesentlichen horizontal, wohingegen die Windschutzscheibe zum Ende des Fahrzeugs hin nach oben angestellt ist. In diesem System ist die Entzerrungsscheibe, durch die die Bilddaten hindurch erfasst werden, ebenfalls mit einem positiven spitzen Winkel zu der Windschutzscheibe geneigt. Das Vorzeichen des Winkels hängt von der Betrachtungsrichtung ab, so dass gemäß einer alternativen Betrachtungsweise die Windschutzscheibe mit einem negativen spitzen Winkel zu der optischen Achse geneigt ist, und die Entzerrungsscheibe mit einem spitzen Winkel zu der Windschutzscheibe geneigt ist, der das gleiche Vorzeichen hat, d.h. negativ ist.

Die transparente Entzerrungsscheibe sieht eine Stauchung des Bildes in einer Richtung vor, wobei in dieser Richtung die Windschutzscheibe zur optischen Achse geneigt ist. Da die Neigung oder Krümmung oder keilförmige Ausbildung der Windschutzscheibe zur optischen Achse eine zur Stauchung komplementäre Streckung in eine Richtung, d.h. in Richtung des Azimutalwinkels, erzeugt, wird von der Entzerrungsscheibe eine Stauchung in diese Richtung vorgesehen. Die Stauchung ist mit einem Stauchungsgrad vorgesehen, der in dieser Richtung, d.h. in Richtung des Azimutalwinkels, mit zunehmendem Winkel zur Windschutzscheibe abnimmt. Je flacher ein Strahlungsverlauf zur Windschutzscheibe verläuft, desto geringer ist auch die Stauchung, die von der Entzerrungsscheibe erzeugt wird. Der Stauchungsgrad nimmt zu, je mehr ein Lichtstrahl zur Senkrechten der Windschutzscheibe (und auch zur Senkrechten der Entzerrungsscheibe) geneigt ist, da die von der Windschutzscheibe vorgesehene Streckung in Azimutalrichtung mit dem Winkel zunimmt, d.h. mit zunehmender Nähe zur Senkrechten ansteigt. Grundsätzlich lässt sich die Streckung, die ein Strahlengang beim Auftreffen auf die Windschutzscheibe in der Senkrechten erfährt, auch als Normierungspunkt für eine unverzerrte Übertragung betrachten, wobei dann mit zunehmendem Winkel zur Senkrechten die Windschutzscheibe eine zunehmende Stauchung vorsieht. Bei dieser Betrachtung ergibt sich jedoch der gleiche Verlauf des Stauchungsgrads, der durch die Entzerrungsscheibe vorgesehen wird. Abhängig vom Normierungspunkt kann jedoch die von der Entzerrungsscheibe vorgesehene Stauchung auch in ihrer inversen Eigenschaft, d.h. als Streckung durch die Entzerrungsscheibe, betrachtet werden.

Eine erfindungsgemäße Bildkorrekturvorrichtung umfasst eine Halterungsvorrichtung, die relativ zur Windschutzscheibe befestigt wird, entweder durch eine mittelbare oder eine unmittelbare Befestigung. Die Halterungsvorrichtung ist, wie auch die Entzerrungsscheibe, im Inneren des Kraftfahrzeugs eingerichtet, insbesondere in der Fahrgastzelle. Mit der Halterungsvorrichtung ist eine erfindungsgemäße transparente Entzerrungsscheibe verbunden. Somit ist die Entzerrungsscheibe durch die Halterungsvorrichtung (und gegebenenfalls zusätzlichen Befestigung) in ihrer räumlichen Relation gegenüber der Windschutzscheibe konstant. Insbesondere der Winkel zwischen Entzerrungsscheibe und Windschutzscheibe oder der Krümmungsverlauf oder der Verlauf der Verjüngung der Entzerrungsscheibe ist durch die Halterungsvorrichtung und die Befestigung festgelegt. Aufgrund des erfindungsgemäßen Winkels zwischen Entzerrungsscheibe und Windschutzscheibe oder des Krümmungsverlaufs oder des Verlaufs der Verjüngung der Entzerrungsscheibe ist die Halterungsvorrichtung derart definiert, dass diese die Entzerrungsscheibe über die Befestigung mit einem Winkel geneigt zur Windschutzscheibe positioniert oder den Krümmungsverlauf oder der Verlauf der Verjüngung bezogen auf die Windschutzscheibe vorsieht. Insbesondere wird dadurch die Windschutzscheibe im Inneren des Kraftfahrzeugs mit einer festen räumlichen Relation zur Windschutzscheibe positioniert.

Vorzugsweise unterscheidet sich der Brechungsindex der Entzerrungsscheibe, die von der Halterungsvorrichtung gehalten wird, von dem Brechungsindex der Windschutzscheibe. Eine räumliche Verteilung des Brechungsindex in der Entzerrungsscheibe unterscheidet sich von einer Verteilung des Brechungsindex in der Windschutzscheibe. Durch diese verschiedenen Brechungsindizes bzw. deren Verteilungen kann die optische Wirkung der Entzerrungsscheibe komplementär zu der optischen Wirkung der Windschutzscheibe vorgesehen sein, insbesondere unter Berücksichtigung des Winkels zwischen Entzerrungsscheibe und Windschutzscheibe.

Die Entzerrungsscheibe ist vorzugsweise als Platte ausgebildet, gemäß einer spezifischen Ausführungsform planparallel. Somit umfasst die Entzerrungsscheibe zwei Oberflächen, die entlang zweier (zueinander paralleler) Ebenen oder gekrümmten Flächen verlaufen. Gegebenenfalls kann jedoch die als Platte vorgesehene Entzerrungsscheibe eine Krümmung in Azimutalrichtung aufweisen, um gegebenenfalls zusätzliche optische Eigenschaften zur Kompensation der von der Windschutzscheibe vorgesehenen Verzerrung zu ermöglichen. Wie bereits beschrieben ist die Entzerrungsscheibe vorzugsweise aus einem Kunststoffmaterial hergestellt, beispielsweise aus PMMA, wobei jedoch die Entzerrungsscheibe auch aus anderen Materialien hergestellt sein kann, beispielsweise aus Glas, die sich von dem Material unterscheiden, aus dem die Windschutzscheibe hergestellt ist. Die Entzerrungsscheibe hat vorzugsweise die gleiche Dicke wie die Windschutzscheibe, kann jedoch auch eine geringere oder eine größere Dicke aufweisen als die Windschutzscheibe, um dadurch die durch die Windschutzscheibe hervorgerufene Verzerrung kompensieren zu können.

Durch die Halterungsvorrichtung der Bildkorrekturvorrichtung ist die Windschutzscheibe mit einem positiven spitzen Winkel zu einer Längsachse des Kraftfahrzeugs geneigt, entlang der eine optische Achse verläuft, oder hat einen kompensierenden Krümmungsverlauf oder Verlauf der Verjüngung gegenüber der Windschutzscheibe. Die Entzerrungsscheibe ist gemäß einer Ausführungsform mit einem positiven spitzen Winkel zu der Windschutzscheibe geneigt, wobei hierbei das gleiche Betrachtungssystem wie bei der Betrachtung des Winkels zwischen Windschutzscheibe und Längsachse verwendet wird. Wie bereits bemerkt, können in einem alternativen Betrachtungssystem beide Winkel ein negatives Vorzeichen aufweisen, wobei jedoch unabhängig vom Betrachtungssystem beide Winkel zum einen spitze Winkel sind und zum anderen das gleiche Vorzeichen aufweisen.

Die Erfindung wird ferner realisiert durch ein Bildaufnahmesystem, das eine erfindungsgemäße Bildkorrekturvorrichtung umfasst. Das Bildaufnahmesystem ist zur Anordnung im Inneren des Kraftfahrzeugs eingerichtet und umfasst eine Kameravorrichtung. Die Bildkorrekturvorrichtung zwischen Kameravorrichtung und der Windschutzscheibe ist in einer optischen Achse des Bildaufnahmesystems und der Kameravorrichtung vor der Kameravorrichtung angeordnet. Somit ist die Kameravorrichtung auf die Bildkorrekturvorrichtung ausgerichtet, und gleichzeitig auch auf einen Aufnahmebereich außerhalb des Kraftfahrzeugs ausgerichtet. Die Kameravorrichtung ist somit insgesamt durch die Bildkorrektur hindurch und durch die Windschutzscheibe hindurch auf einen Aufnahmebereich außerhalb des Kraftfahrzeugs gerichtet, wobei insbesondere die Halterung und deren Befestigung relativ zur Windschutzscheibe diese Orientierung der Kameravorrichtung vorsehen. In diesem System ist die Entzerrungsscheibe vorzugsweise das einzige Element, durch das der Strahlengang zwischen Kameravorrichtung und Windschutzscheibe verläuft

### Kurze Beschreibung der Zeichnungen

- Die Figur 1: zeigt eine erfindungsgemäße Vorrichtung in symbolischer Darstellung zur Erläuterung des erfindungsgemäßen Verfahrens; und
- die Figuren 2a und 2b: zeigen einen Verzerrungsfehler bei unkompensierten optischen Systemen (Figur 2a) und nach der erfindungsgemäßen Korrektur (Figur 2b).

### Ausführungsformen

Die Figuren betreffen eine spezifische Ausbildung der Erfindung, bei der die Entzerrungsscheibe geneigt zur Windschutzscheibe angeordnet ist.

Weitere, nicht dargestellte Ausführungen der Erfindung sehen einen Krümmungsverlauf zumindest in einer Erstreckungsrichtung der Windschutzscheibe komplementär zur Windschutzscheibe vor, oder einen Verlauf der Verjüngung, der die Verzerrung durch die Windschutzscheibe zumindest teilweise und in mindestens eine Erstreckungsrichtung der Windschutzscheibe kompensiert.

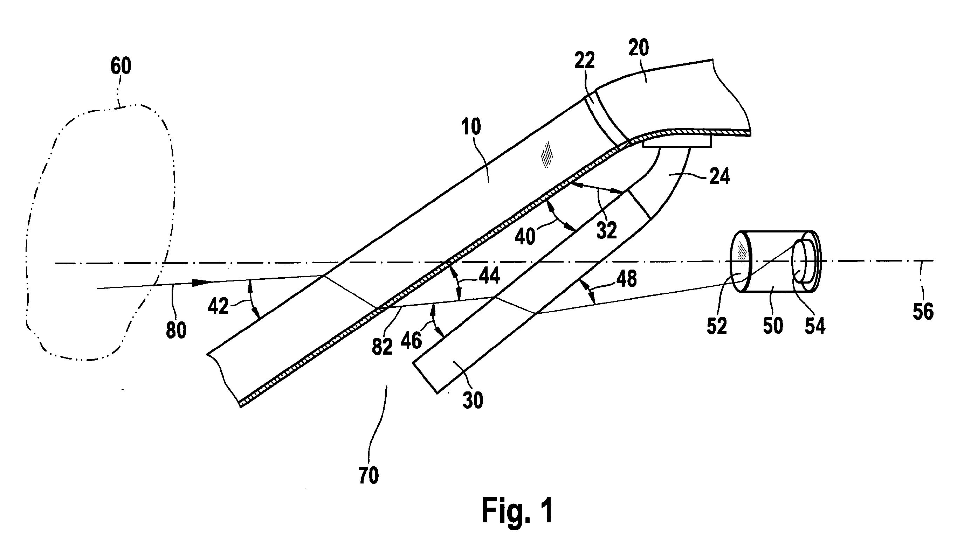

Die Figur 1 zeigt im Querschnitt eine Windschutzscheibe 10 und ein daran angrenzendes Dach 20 eines Kraftfahrzeugs, das über einer Halterung 22 die Windschutzscheibe 10 hält. An dem Dach ist eine weitere, symbolisch dargestellte Halterung 24 vorgesehen, mit der eine erfindungsgemäße Entzerrungsscheibe 30 mit dem Dach und somit mittelbar mit der Windschutzscheibe 10 befestigt ist. Somit ist die Entzerrungsscheibe 30 in festem räumlichem Verhältnis mit der Windschutzscheibe 10. Ein Abstand 32 zwischen Windschutzscheibe 10 und Entzerrungsscheibe 30 dient nur der exemplarischen Darstellung und kann auf Null reduziert werden. Ferner ist zu bemerken, dass Entzerrungsscheibe und Windschutzscheibe in einem spitzen Winkel 40 zueinander angeordnet sind.

Das in Figur 1 dargestellte System umfasst ferner ein Bildaufnahmesystem 50 mit einer abbildenden Linse 52 und einem Bildaufnahmesensor 54. Diese definieren die optische Achse 56 des gesamten optischen Systems. Die Kameravorrichtung 50 ist durch die Entzerrungsscheibe 30 und die Windschutzscheibe 10 auf einen Aufnahmebereich 60 ausgerichtet. Der Aufnahmebereich 60 liegt vor der Windschutzscheibe und außerhalb der Fahrgastzelle 70, die sich hinter der Windschutzscheibe befindet.

Ein vom Aufnahmebereich 60 ausgehender Lichtstrahl 80 trifft auf die Windschutzscheibe 10 in einem ersten Winkel 42 und wird durch den Brechungsindex der Windschutzscheibe 10 an der Windschutzscheibenoberfläche gebrochen und zu einer Senkrechten der Windschutzscheibe 10 hin gebeugt. Je senkrechter der Strahl 80 auf die Windschutzscheibe auftrifft, d.h. je mehr der Winkel 42 einem 90°-Winkel entspricht, desto größer ist der Winkelunterschied zwischen dem auf die Windschutzscheibe auftreffenden Strahl und dem aus der Windschutzscheibe austretenden Strahl 82. Es ergibt sich somit eine vom Einfallswinkel des Strahls 80 abhängige Winkeldifferenz zwischen den Winkelbeträgen 42 und 44. 44 ist der Winkel, den der aus der Windschutzscheibe austretende Strahl 82 mit der Windschutzscheibe 10 einschließt. Wenn die Winkeldifferenzen nicht vom Eintrittswinkel des Strahls 80 zur Windschutzscheibe 10 abhängig wäre, so könnte die von der Windschutzscheibe vorgesehene Verzerrung durch eine konstante, winkelunabhängige Stauchung kompensiert werden, beispielsweise durch entsprechende Anpassung der Optik 52, 54. Da jedoch die Winkeldifferenz umso größer ist, je steiler der Strahl 80 auf die Windschutzscheibe 10 auftrifft, wird von der Windschutzscheibe eine winkelabhängige Streckung vorgesehen (oder auch Stauchung, abhängig vom Ausgangspunkt), die ebenso winkelabhängig von der Entzerrungsscheibe 30 kompensiert werden muss. Durch entsprechende Neigung der Entzerrungsscheibe 30 zur Windschutzscheibe ergibt sich ein dazu komplementärer Effekt, wobei der Eintrittswinkel 46 des Strahls 82 auf die Entzerrungsscheibe 30 eine entsprechende Brechung an der Entzerrungsscheibe 30 zur Folge hat (aufgrund deren Eigenschaften, insbesondere aufgrund der Brechungseigenschaften), und der Austrittswinkel 48 um die Verzerrung durch die Windschutzscheibe kompensiert wurde. Die Kompensation erfolgt dadurch, dass ein nahezu senkrechter Auftrittswinkel auf die Windschutzscheibe (starke Winkeldifferenz) in einen deutlich flacher auf die Entzerrungsscheibe 30 einfallenden Strahl umgesetzt wird, wobei die Eintrittswinkel auf die Entzerrungsscheibe und auf die Windschutzscheibe desselben Strahlengangs jeweilige Winkeldifferenzen zu deren zugehörigen Austrittswinkeln hervorrufen, die zueinander komplementär sind. Dadurch ergibt sich die erwünschte umgekehrte Winkelabhängigkeit, mit der die Verzerrungseffekte der Windschutzscheibe sich durch die Entzerrungseffekte der Entzerrungsscheibe kompensieren lassen.

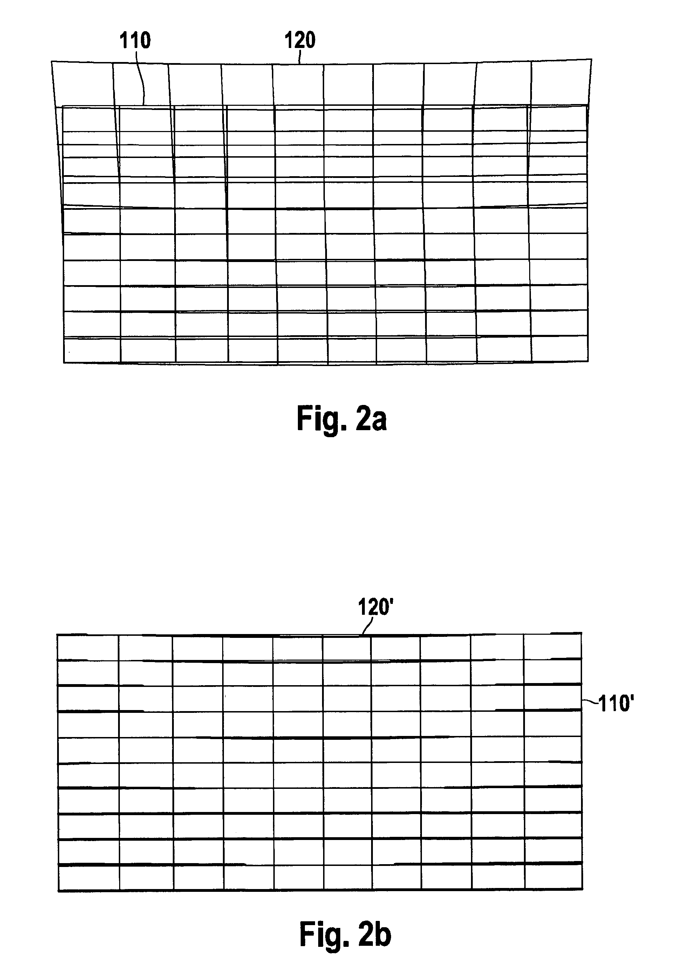

Die Figur 2a zeigt zwei übereinander liegende Gitter, wobei das erste, regelmäßige und unverzerrte Gitter 110 ein Normgitter darstellt, das einen Norm-Ausgangsstrahlengang im Aufnahmebereich (vgl. Bezugszeichen 60 von Figur 1) hervorruft. Die sich in Figur 2a nach rechts erstreckende Achse entspricht einer Richtung, die in Figur 1 in die Zeichenebene senkrecht hinein verläuft, wobei die in Figur 2a nach oben führende Achse einem Azimutalwinkel entspricht, d.h. in der Figur 1 der nach oben führenden Achse in der Zeichenebene entspricht. Das mit Bezugszeichen 120 bezeichnete Gitter entspricht dem Normmuster 110 nach Durchtritt durch die Windschutzscheibe (in Figur 1: Bezugszeichen 10). Es ist zu erkennen, dass sich in unteren Bereichen, d.h. bei sehr flachen Auftrittswinkeln (vgl. Bezugszeichen 42 von Figur 1), nur geringfügige Verzerrungen ergeben, wobei die Verzerrung deutlich anwächst, je mehr sich der Eintrittswinkel der Senkrechten zur Windschutzscheibe nähert. Insbesondere ist zu erkennen, dass die oberste Reihe mit einem Faktor von nahezu 2 in die Azimutalrichtung, d.h. in Figur 2a in die Y-Richtung, gestreckt ist.

Wie bereits anhand von Figur 1 erläutert, wird diese winkelabhängige Verzerrung durch den komplementären Effekt der Entzerrungsscheibe aufgehoben, die für stark senkrecht einfallende Strahlengänge eine Stauchung vorsieht, die bei flacher einfallenden Strahlengängen geringer ist. Die Figur 2b zeigt somit das bereits in Figur 2a dargestellte Normmuster 110', das auf die Windschutzscheibe trifft, sowie das zugehörige, durch die Windschutzscheibe verzerrte und die Entzerrungsscheibe entzerrte Bild 120'. Es ist aus einem Vergleich zwischen Figur 2b und Figur 2a zu erkennen, dass durch die erfindungsgemäße Entzerrung die von der Windschutzscheibe vorgesehene Verzerrung nahezu vollständig kompensiert werden kann, so dass das vom Kamerasystem erfasste Muster 120' nahezu identisch ist mit dem ursprünglich abgestrahlten Normmuster 110'.

Aus deren Vergleich zwischen der Figur 2a und 2b ist ferner zu erkennen, dass sich eine zusätzliche horizontale Kissenverzerrung in Figur 2a insbesondere in den oberen Reihen bemerkbar macht, die durch geeignete Krümmung der Entzerrungsscheibe kompensiert werden kann. Die geeignete Krümmung entspricht im Wesentlichen der Krümmung der Windschutzscheibe in diesem Bereich. Vorzugsweise verläuft daher die der Windschutzscheibe zugewandte Oberfläche der Entzerrungsscheibe äquidistant zu der Oberfläche der Windschutzscheibe, die der Entzerrungsscheibe zugewandt ist. Die gegenüberliegende Oberfläche der Entzerrungsscheibe verläuft äquidistant zu der Oberfläche der Entzerrungsscheibe, die der Windschutzscheibe zugewandt ist.

## Patentansprüche

1. Verfahren zur verzeichnungsfreien Erfassung von Bilddaten durch eine Windschutzscheibe (10) hindurch, mit den Schritten:
Vorsehen eines Bildaufnahmesystems (50) im Inneren (70) eines Kraftfahrzeugs; Ausrichten des Bildaufnahmesystems (50) entlang einer optischen Achse (56) des Bildaufnahmesystems (50) auf einen Aufnahmebereich (60) außerhalb des Kraftfahrzeugs und
Erfassen von Bilddaten des Aufnahmebereichs (60) durch die Windschutzscheibe (10) hindurch, die geneigt zu der optischen Achse (56) ist, wobei bei der Erfassung der Bilddaten das Bildaufnahmesystem den Aufnahmebereich (60) durch eine transparente Entzerrungsscheibe (30) hindurch erfasst, und die transparente Entzerrungsscheibe (30) eine Formabweichung zur Windschutzscheibe (10) aufweist, **dadurch gekennzeichnet, dass** die Entzerrungsscheibe (30) eine räumliche Verteilung des Brechungsindex aufweist, die sich von einer Verteilung des Brechungsindex der Windschutzscheibe (10) unterscheidet und im Inneren des Kraftfahrzeugs angeordnet ist.

2. Verfahren nach Anspruch 1, wobei die Formabweichung ein Abweichung zu einer planparallelen und zur Windschutzscheibe parallele Platte ist, und die Formabweichung vorgesehen wird (i) eine Krümmung der Entzerrungsscheibe, die im wesentlichen komplementär zu der Krümmung der Windschutzscheibe ist, (ii) eine nicht planparallele oder keilförmige Ausbildung der Entzerrungsscheibe oder (iii) durch eine Anordnung der Entzerrungsscheibe-gewinkelt zu der Windschutzscheibe, oder durch eine Kombination hiervon.

3. Verfahren nach Anspruch 1 oder 2, wobei die Bilddaten durch eine Entzerrungsscheibe (30) hindurch erfasst werden, die einen Brechungsindex aufweist, der sich von dem Brechungsindex der Windschutzscheibe (10) unterscheidet.

4. Verfahren nach Anspruch 1, 2 oder 3, wobei die Bilddaten durch eine Entzerrungsscheibe (30) hindurch erfasst werden, die als eine planparallele Platte ausgebildet ist und zu der Windschutzscheibe (10) in einer Ebene geneigt ist, in der die optische Achse (56) liegt.

5. Verfahren nach einem der vorangehenden Ansprüche, wobei die Windschutzscheibe (10) mit einem positiven spitzen Winkel zu der optischen Achse (56) geneigt ist, und die Entzerrungsscheibe (30), durch die die Bilddaten hindurch erfasst werden, mit einem positiven spitzen Winkel (40) zu der Windschutzscheibe (10) geneigt ist.

6. Verfahren nach einem der vorangehenden Ansprüche, wobei die transparente Entzerrungsscheibe (30) eine Stauchung des Bildes in eine Richtung vorsieht, in der die Windschutzscheibe (10) zur optische Achse (56) geneigt ist, und die Stauchung mit einem Stauchungsgrad vorgesehen ist, der in dieser Richtung mit zunehmendem Winkel (40) zur Windschutzscheibe (10) abnimmt.

7. Bildkorrekturvorrichtung, umfassend: eine Halterungsvorrichtung (24), die zur mittelbaren oder unmittelbaren Befestigung an einer Windschutzscheibe (10) im Inneren eines Kraftfahrzeugs eingerichtet ist, und eine transparente Entzerrungsscheibe (30), die an der Halterungsvorrichtung (24) befestigt ist, wobei die Halterungsvorrichtung die Entzerrungsscheibe (30) über die Befestigung mit einer Formabweichung relativ zur Windschutzscheibe (10) positioniert, **dadurch gekennzeichnet, dass** die Entzerrungsscheibe (30) eine räumliche Verteilung des Brechungsindex aufweist, die sich von einer Verteilung des Brechungsindex der Windschutzscheibe (10) unterscheidet.

8. Bildkorrekturvorrichtung nach Anspruch 7, wobei die Entzerrungsscheibe (30) als eine planparallele Platte ausgebildet ist.

9. Bildkorrekturvorrichtung nach Anspruch 7 oder 8, wobei die Windschutzscheibe (10) mit einem positiven spitzen Winkel zu einer Längsachse des Kraftfahrzeugs geneigt ist, entlang der eine optische Achse (56) verläuft und die Entzerrungsscheibe mit einem positiven spitzen Winkel (40) zu der Windschutzscheibe (10) geneigt ist.

10. Bildaufnahmesystem mit einer Bildkorrekturvorrichtung nach einem der Ansprüche 7 - 9, wobei das Bildaufnahmesystem zur Anordnung im Inneren (70) des Kraftfahrzeugs eingerichtet ist und eine Kameravorrichtung (50) umfasst, wobei die Bildkorrekturvorrichtung (30) zwischen Kameravorrichtung (50) und Windschutzscheibe in einer optischen Achse (56) des Bildaufnahmesystems und der Kameravorrichtung (50) vor der Kameravorrichtung (50) angeordnet ist und die Kameravorrichtung durch die Bildkorrekturvorrichtung und durch die Windschutzscheibe hindurch auf einen Aufnahmebereich (60) gerichtet ist.

## Claims

1. Method for the distortion-free capture of image data through a windscreen (10), having the steps:
providing an image recording system (50) in the interior (70) of a motor vehicle;
aligning the image recording system (50) along an optical axis (56) of the image recording system (50) toward a recording region (60) outside the motor vehicle, and
capturing image data from the recording region (60) through the windscreen (10) which is inclined with respect to the optical axis (56), wherein,
during the capture of the image data, the image recording system captures the recording region (60) through a transparent rectification pane (30), and the transparent rectification pane (30) has a shape deviation with respect to the windscreen (10), **characterized in that** the rectification pane (30) has a refractive index spatial distribution which differs from a refractive index distribution of the windscreen (10), and is arranged in the interior of the motor vehicle.

2. Method according to Claim 1, wherein the shape deviation is a deviation with respect to a plane-parallel plate which is parallel to the windscreen, and the shape deviation is provided (i) as a curvature of the rectification pane which is substantially complementary to the curvature of the windscreen, (ii) as a non-plane-parallel or wedge-shaped form of the rectification pane, or (iii) by an arrangement of the rectification pane at an angle with respect to the windscreen, or by a combination of these.

3. Method according to Claim 1 or 2, wherein the image data is captured through a rectification pane (30) which has a refractive index which differs from the refractive index of the windscreen (10).

4. Method according to Claim 1, 2 or 3, wherein the image data is captured through a rectification pane (30) which is in the form of a plane-parallel plate and which is inclined with respect to the windscreen (10) in a plane in which the optical axis (56) lies.

5. Method according to one of the preceding claims, wherein the windscreen (10) is inclined at a positive acute angle with respect to the optical axis (56), and the rectification pane (30) through which the image data is captured is inclined at a positive acute angle (40) with respect to the windscreen (10).

6. Method according to one of the preceding claims, wherein the transparent rectification pane (30) generates a compression of the image in a direction in which the windscreen (10) is inclined with respect to the optical axis (56), and the compression is provided with a degree of compression which decreases in said direction with increasing angle (40) with respect to the windscreen (10).

7. Image correction device, comprising: a bracket device (24) which is designed for indirect or direct fastening to a windscreen (10) in the interior of a motor vehicle, and a transparent rectification pane (30) which is fastened to the bracket device (24), wherein, by means of the fastening, the bracket device positions the rectification pane (30) with a shape deviation relative to the windscreen (10), **characterized in that** the rectification pane (30) has a refractive index spatial distribution which differs from a refractive index distribution of the windscreen (10).

8. Image correction device according to Claim 7, wherein the rectification pane (30) is in the form of a plane-parallel plate.

9. Image correction device according to Claim 7 or 8, wherein the windscreen (10) is inclined at a positive acute angle with respect to a longitudinal axis of the motor vehicle along which an optical axis (56) runs, and the rectification pane is inclined at a positive acute angle (40) with respect to the windscreen (10).

10. Image recording system having an image correction device according to one of Claims 7 to 9, wherein the image recording system is designed for arrangement in the interior (70) of the motor vehicle and comprises a camera device (50), wherein the image correction device (30) is arranged in front of the camera device (50) and between the camera device (50) and the windscreen in an optical axis (56) of the image recording system and of the camera device (50), and the camera device is directed through the image correction device and through the windscreen toward a recording region (60).

## Revendications

1. Procédé d'enregistrement sans distorsion de données d'image à travers un pare-brise (10), avec les étapes suivantes :
placement d'un système de prise d'image (50) à l'intérieur (70) d'un véhicule automobile ;
alignement du système de prise d'image (50) le long d'un axe optique (56) du système de prise d'image (50) en fonction d'une plage de prise d'image (60) prévue à l'extérieur du véhicule automobile ;
enregistrement des données d'image de la zone de prise d'image (60) à travers le pare-brise (10) inclinées par rapport à l'axe optique (56) ;
lors de l'enregistrement des données d'image, le système de prise d'image déterminant la zone de prise d'image (60) au travers d'un disque de correction transparent (30) et le disque de correction transparent (30) présentant une déformation par rapport au pare-brise (10) ;
**caractérisé en ce que** le disque de correction (30) présente une répartition dans l'espace de l'indice de réfraction différant de la répartition de l'indice de réfraction du pare-brise (10) et qu'il est disposé à l'intérieur du véhicule automobile.

2. Procédé selon la revendication 1, l'écart de forme étant un écart par rapport à une plaque parallèle au plan et parallèle au pare-brise et l'écart de forme comprenant (i) une courbure du disque de correction pour l'essentiel complémentaire à la courbure du pare-brise ; (ii) une déformation non parallèle au plan ou en forme de coin du disque de correction ou (iii) un agencement du disque de correction placé selon un certain angle par rapport au pare-brise ou une combinaison de ceux-ci.

3. Procédé selon la revendication 1 ou 2, les données d'image étant enregistrées à travers un disque de correction (30) présentant un indice de réfraction différant de l'indice de réfraction du pare-brise (10).

4. Procédé selon la revendication 1, 2 ou 3, les données d'image étant enregistrées à travers un disque de correction (30) prenant la forme d'une plaque parallèle au plan et inclinée par rapport au pare-brise (10) dans un plan intégrant l'axe optique (56).

5. Procédé selon l'une quelconque des revendications précédentes, le pare-brise (10) étant incliné selon un angle aigu positif par rapport à l'axe optique (56) et le disque de correction (30) à travers lequel les données d'image sont enregistrées étant incliné selon un angle aigu positif (40) par rapport au pare-brise (10).

6. Procédé selon l'une quelconque des revendications précédentes, le disque de correction transparent (30) prévoyant un refoulement de l'image dans une direction dans laquelle le pare-brise (10) est incliné par rapport à l'axe optique (56) et le refoulement comprenant un degré de refoulement décroissant dans la direction d'augmentation de l'angle (40) par rapport au pare-brise (10).

7. Dispositif de correction d'image, comprenant :
un dispositif de support (24) placé à l'intérieur d'un véhicule automobile pour être fixé directement ou indirectement à un pare-brise (10) et un disque de correction transparent (30) fixé au dispositif de support (24), le dispositif de support positionnant le disque de correction (30) par le biais de la fixation avec écart de forme par rapport au pare-brise (10), **caractérisé en ce que** le disque de correction (30) présente une répartition dans l'espace de l'indice de réfraction différant d'une répartition de l'indice de réfraction du pare-brise (10).

8. Dispositif de correction d'image selon la revendication 7, le disque de correction (30) prenant la forme d'une plaque parallèle par rapport au plan.

9. Dispositif de correction d'image selon la revendication 7 ou 8, le pare-brise (10) étant incliné selon un angle aigu positif par rapport à un axe longitudinal du véhicule automobile le long duquel un axe optique (56) s'étend et le disque de correction étant incliné selon un angle aigu positif (40) par rapport au pare-brise (10).

10. Système de prise d'image pourvu d'un dispositif de correction d'image selon l'une quelconque des revendications 7 à 9, le système de prise d'image étant conçu pour être agencé à l'intérieur (70) du véhicule automobile et comprenant un dispositif de caméra (50), le dispositif de correction d'image (30) prévu entre le dispositif de caméra (50) et le pare-brise étant disposé devant le dispositif de caméra (50) dans un axe optique (56) du système de prise d'image et du dispositif de caméra (50) et le dispositif de caméra étant orienté à travers le dispositif de correction d'image et à travers le pare-brise sur une zone de prise d'image (60).
